# EUROPEAN PATENT SPECIFICATION

(11) **EP 2 467 028 B1**
(45) Date of publication and mention of the grant of the patent: **04.06.2014**
(21) Application number: 10814056.7
(22) Date of filing: 21.08.2010
(51) Int. Cl.: A23K 1/10

(54) **CHUNKS-IN-JELLY FOOD COMPOSITIONS HAVING AN APPEALING APPEARANCE**
KLUMPEN-IN-GELEE-NAHRUNGSMITTELZUSAMMENSETZUNG MIT ANSPRECHENDER ERSCHEINUNG
COMPOSITIONS ALIMENTAIRES À MORCEAUX DANS DE LA GELÉE AYANT UN ASPECT APPÉTISSANT

(30) Priority: 26.08.2009 US 275184 P
(43) Date of publication of application: 27.06.2012
(73) Proprietor: Nestec S.A., 1800 Vevey (CH)
(72) Inventor: PIBAROT, Patrick, F-80170 Guillaucourt (FR); WATELAIN, Annie, F-80300 Lavieville (FR)
(74) Representative: Rupp, Christian
(86) International application number: PCT/US2010/002310
(87) International publication number: WO 2011/028241

(56) References cited:
- WO-A2-2006/065641
- US-A1- 2006 105 084
- US-A1- 2006 147 583
- US-A1- 2008 152 774
- US-A1- 2008 152 774
- US-B1- 6 280 779
- US-B1- 6 280 779
- VANDEPUTTE ET AL.: 'From Sucrose To Starch Granule To Starch Physical Behaviour: A Focus On Rice Starch.' CARBOHYDRATE POLYMERS. vol. 58, no. 3, 25 November 2004, pages 245 - 266

## Description

### BACKGROUND OF THE INVENTION

### Field of the Invention

The invention relates generally to food compositions and particularly to chunks-in-jelly food compositions having an appealing appearance.

### Description of Related Art

Chunks-in-jelly food compositions are typically produced by making a fluid jelly using k-carrageenan, carob, guar, and xanthan as gum ingredients. The jelly is placed in a container and hot chunks of meat or a meat analog are mixed with the fluid jelly. The chunks-in-jelly mixture is placed in a container, sealed, and retorted to produce a chunks-in-jelly food composition.

Many chunks-in-jelly food compositions use all-meat chunks to obtain food compositions. However, the use of cereals or starches in combination with meat to produce chunks is often desirable because of the availability and lower cost of cereals compared to the availability and cost of meat. Because of this, for some applications, chunks of meat analog are made using cereals or starches as an ingredient. Further, for some applications, meat analog chunks made entirely of cereals/starches and other non-meat ingredients are used.

Typical starches contain about 75% amylopectin and 25% amylose. The starches are synthesized in the cereal or other plant using two distinct biochemical pathways; one pathway produces branched chain polysaccharides (amylopectin) and the other pathway produces straight-chain polysaccharides (amylose). Amylopectin is a branched chain of α-D-(1-4) and α-D-(1-6)-glucosidic linkages; amylose is a linear chain of α-D-(1-4)-linked glucose residues. However, some cereals/plants are deficient in an enzyme in the amylose synthetic pathway. These produce amylopectin but virtually no amylose. These cereals are sometimes referred to as "waxy" cereals, *e.g.,* waxy corn, waxy wheat, or waxy rice.

Despite the desirability of chunks containing cereals or starches, chunks made using cereal or starch or combinations of meat with cereal/starch have not been used in chunks-in-jelly food compositions because the starch causes the composition to have an unappealing appearance, *e.g*., the composition is cloudy. Typically, the cloudiness is caused by white-like imperfections or lumps in the jelly that reduce the clarity of the jelly and cause the product to have the appearance of a low quality product.

There is, therefore, a need for novel chunks-in-jelly food compositions that do not have a cloudy and unappealing appearance and that have the appearance of a high quality product, yet which possess chunks containing cereal or starch.

### SUMMARY OF THE INVENTION

It is, therefore, an object of the present invention, which is defined by the claims, to provide new chunks-in-jelly food compositions.

It is a further object of the invention to provide new chunks-in-jelly food compositions that have an appealing appearance.

It is another object of the invention to provide chunks-in-jelly food compositions that do not have a cloudy appearance.

It is another object of the invention to provide methods for preparing chunks-in-jelly food compositions that have an appealing and/or non-cloudy appearance.

One or more of these or other objects are achieved by preparing a novel chunks-in-jelly food composition comprising a jelly and one or more chunks comprising from about 5% to about 95% of one or more cereals or starches, wherein the cereals or starches contain no significant amount, namely less than 5%, of amylose, and from about 5% to about 95% of one or more meats, animal products and/or other ingredients. Any cereal or starch with an amylose content of less than about 5% that is useful for preparing a chunks-in-jelly food composition can be used in the invention. Typically, cereal grains or flours are used. Various packages comprising the novel chunks-in-jelly food compositions are also provided, as are means for communicating information about the food compositions, their benefits and their use.

Other and further objects, features, and advantages of the present invention will be readily apparent to those skilled in the art.

### DETAILED DESCRIPTION OF THE INVENTION

### Definitions

The term "no significant amount of amylose" means that the amount of amylose in a cereal or starch is less than the amount of amylose in a cereal or starch that would migrate from a meat analog chunk into the jelly in a chunks-in-jelly food composition and produce a cloudy and unappealing appearance. Typically, a cereal or starch containing "no significant amount of amylose" contains less than about 5% amylose.

The term "meat" means real meat, meat by-products, or combinations thereof. "Real meat" and "meat by-products" are understood to mean all the fleshy parts of slaughtered animals in the fresh state or preserved by an appropriate treatment and all of the products and by-products arising from the processing of the bodies or body parts of the animals. The term "meat" is intended to include flesh of any animal, including mammals, birds, reptiles, amphibians and fish.

The term "animal products" means products derived from animals. Animal products include, but are not limited to, meat and meat by-products, as defined above, as well as products prepared in distinct forms, such as animal dehydrated protein, plasma powder, or bone meal, to name a few.

The term "meat chunk" means a chunk made entirely of meat or of combinations of meat or other non-meat ingredients with cereal or starch. The latter can also be referred to as a "meat analog chunk." Meat chunks and meat analog chunks can also be made entirely of non-meat ingredients, such as where they are made entirely of one or more beans, cereals and/or starches.

The term "food composition" means a product or composition that is intended for ingestion by an animal.

The term "animal" means any animal that could benefit from or enjoy the consumption of the food compositions of the present invention, including human, avian, bovine, canine, equine, feline, hircine, lupine, murine, ovine, or porcine animals.

The term "companion animal" means domesticated animals such as cats, dogs, rabbits, guinea pigs, ferrets, hamsters, mice, gerbils, horses, cows, goats, sheep, donkeys, pigs, and the like.

All percentages expressed herein are by weight of the total weight of the composition unless expressed otherwise.

All ratios expressed herein are on a weight:weight (w/w) basis unless expressed otherwise.

As used herein, the singular form of a word includes the plural, and vice versa, unless the context clearly dictates otherwise. Thus, the references "a", "an", and "the" are generally inclusive of the plurals of the respective terms. For example, reference to "a chunk", "a method", or "a food" includes a plurality of such "chunks", "methods", or "foods." Likewise the terms "include", "including" and "or" should all be construed to be inclusive, unless such a construction is clearly prohibited from the context. Similarly, the term "examples," particularly when followed by a listing of terms, is merely exemplary and illustrative and should not be deemed to be exclusive or comprehensive.

The term "comprising" is intended to include embodiments encompassed by the terms "consisting essentially of" and "consisting of'. Similarly, the term "consisting essentially of" is intended to include embodiments encompassed by the term "consisting of".

The methods and compositions and other advances disclosed herein are not limited to particular methodology, protocols, and reagents described herein because, as the skilled artisan will appreciate, they may vary. Further, the terminology used herein is for the purpose of describing particular embodiments only, and is not intended to, and does not, limit the scope of that which is disclosed or claimed.

Unless defined otherwise, all technical and scientific terms, terms of art, and acronyms used herein have the meanings commonly understood by one of ordinary skill in the art in the field(s) of the invention, or in the field(s) where the term is used. Although any compositions, methods, articles of manufacture, or other means or materials similar or equivalent to those described herein can be used in the practice of the present invention, the preferred compositions, methods, articles of manufacture, or other means or materials are described herein.

### The Invention

In one aspect, the invention provides a new chunks-in-jelly food composition that has an appealing appearance. The composition comprises a jelly and one or more chunks, the chunks comprising from about 5% to about 95% of one or more cereals and starches, wherein the cereals and starches contain no significant amount, namely less that 5%, of amylose, and from about 5% to about 95% of one or more meats, animal products, or other ingredients.

The invention is based upon the discovery that amylose is responsible for the cloudiness seen chunks-in-jelly food compositions that comprise cereal or starch as a component of the chunks. It has been determined that chunks-in-jelly food compositions made with chunks that contain cereal or starch with a significant amount of amylose have a cloudy and unappealing appearance while chunks-in-jelly food compositions made with chunks that contain cereal or starch with no significant amount of amylose do not have a cloudy and unappealing appearance.

Without being bound by theory, it is believed that the cloudiness occurs because the amylose in the cereal or starch used to make the chunks migrates out of the chunks into the jelly, thereby causing the jelly to appear cloudy instead of transparent. By reducing or eliminating the amylose from the chunks, the cloudiness can be avoided. The chunks-in-jelly compositions made with little or no amylose have the appearance of a high quality product, basically because the jelly appears transparent. In essence, the use of cereals or starches that contain very little, if any, amylose in chunks-in-jelly food compositions prevents the cloudiness and unappealing appearance that is characteristic of chunks-in-jelly food compositions made with cereal or starch that contains amylose.

Cereals or starches useful in the compositions of the present invention can be any cereal or starch containing no significant amount, namely less that 5%, of amylose and that is suitable for making chunks useful for producing chunks-in-jelly food compositions. The cereal or starch used in the present invention contains less than 5%, 4%, 3%, 2%, 1%, 0.5%, 0.25%, or 0.1% amylose. In preferred embodiments, the cereal or starch contains less than 2%, amylose, preferably less than 1%, most preferably less than 0.5%. It will be appreciated that chunks with more starch should contain a starch with less amylose, while chunks with less starch may utilize a starch with more amylose, to achieve the beneficial appearance and lack of cloudiness in the final product.

Generally, cereals useful in the present invention include any cereal grain or cereal flour, preferably from wheat, corn, or rice, with low content of amylose. These cereals are generally referred to as "waxy cereals". Preferably waxy cereals have an amylose content of less than about 5%. Waxy cereals include, but are not limited to, waxy corn, waxy rice, and waxy wheat, whether available from genetically modified or unmodified sources. For example, waxy corn and waxy rice could be obtained from genetically unmodified sources while waxy wheat could be obtained from genetically modified species.

Starch from any of these waxy cereals or any other grain or flour from cereal or tuberous sources, such as potatoes or tapioca (cassava), with low content of amylose may be also used. These starches with low content of amylose are generally referred to as "waxy starches". Preferably waxy starches have an amylose content of less than about 5%.

The chunks-in-jelly food compositions contain chunks that are at least partially composed of one or more cereals or starches that contain no significant amount of amylose, as described above. In various embodiments, chunks useful in the present invention can contain from about 5% to about 95% cereals or starches that contain no significant amount of amylose. Specifically, the chunks may contain at least about 5%, 10%, 15%, 20%, 25%, 30%, 35%, 40%, 45%, 50%, 55%, 60%, 65%, 70%, 75%, 80%, 85%, or 90%, 95% of one or more cereals or starches that contain no significant amount of amylose. Viewed another way, chunks useful in the present invention may contain up to about 95%, 90%, 85%, 80%, 75%, 70%, 65%, 60%, 55%, 50%, 45%, 40%, 35%, 30%, 25%, 20%, 1%, 10%, or 5% of one or more cereals or starches that contain no significant amount of amylose.

In addition to the one or more cereals or starches that contain no significant amount of amylose, the chunks of the present invention can contain any other ingredients suitable for chunks-in-jelly food compositions known to the skilled artisan, including protein and lipid sources such as meat, meat by-products, animal dehydrated protein, plasma powder, vegetable protein and protein extracts and the like, as well as fats and oils.

Chunks can also contain one or more additional ingredients known by the skilled artisan to be useful in such compositions. These include vitamins, minerals, amino acids, nucleic acids, fillers, palatability enhancers, binding agents, flavors, stabilizers, emulsifiers, sweeteners, colorants, buffers, salts, coatings, condiments, preservatives, and the like known to skilled artisans. Non-limiting examples of supplementary minerals include calcium, phosphorous, potassium, sodium, iron, chloride, boron, copper, zinc, magnesium, manganese, iodine, selenium, and the like. Non-limiting examples of supplementary vitamins include vitamin A, any of the B vitamins, vitamin C, vitamin D, vitamin E, and vitamin K, including various salts, esters, or other derivatives of the foregoing. Additional dietary supplements may also be included, for example, any form of niacin, pantothenic acid, inulin, folic acid, biotin, amino acids, and the like, as well as salts and derivatives thereof. Stabilizers include substances that tend to increase the shelf life of the composition such as preservatives, synergists and sequestrants, packaging gases, emulsifiers, thickeners, gelling agents, and humectants. Examples of emulsifiers and/or thickening agents include gelatin, cellulose ethers, starch, starch esters, starch ethers, and modified starches. Selection of the ingredients and their amounts is known to skilled artisans. Specific amounts for each additional ingredient will depend on a variety of factors such as the ingredient included in the composition; the species of animal; the animal's age, body weight, general health, sex, and diet; the animal's consumption rate; the purpose for which the food composition is being administered to the animal; and the like. Therefore, the component and ingredient amounts may vary widely and may deviate from the preferred proportions described herein.

In various embodiments, chunks useful in the present invention contain 5% to about 95% of one or more meats, animal products, and/or other ingredients as described above, and from about 5% to 95% of one or more cereals or starches that contain no significant amount of amylose. More particularly, chunks useful in the present invention contain from about 10% to 50% of one or more cereals or starches that contain no significant amount of amylose. In another embodiment, chunks of the present invention contain from about 10% to 25% of one or more cereals or starches that contain no significant amount of amylose. In a specific embodiment, chunks useful in the present invention contain from about 15% to 20% of one or more cereals or starches that contain no significant amount of amylose. In each of these embodiments, the remainder of the chunks comprises meat, animal products, fats and/or alternative and additional components as described above.

In other embodiments, the chunks-in-jelly food compositions are formulated to provide "complete and balanced" nutrition for an animal, such as a companion animal, according to standards established by the Association of American Feed Control Officials (AAFCO). In other embodiments, the food compositions are formulated as a companion animal food composition, including a dog or cat food composition. In various embodiments, the animal is a companion animal, preferably a dog or a cat, most preferably a cat.

The chunks can vary in size depending upon the animal that will consume the product, *e.g.,* the type, age, health, or size of the animal. For example, chunk sizes suitable for dogs typically range from about 10 to 80 millimeters (mm), preferably 20 to 40 mm, on the longest side. Chunk sizes for cats typically range from 3 to 30 mm, preferably 8 to 20 mm, on the longest side.

In another aspect, the invention provides methods for preparing a chunks-in-jelly food composition having an appealing or non-cloudy appearance. The methods comprise a) preparing a chunks mixture comprising one or more cereals and starches, wherein the cereals and starches contain no significant amount, namely less than 5%, of amylose; b) using the chunks mixture to manufacture chunks; c) preparing a jelly; and d) mixing the chunks with the jelly to produce a chunks-in-jelly food composition. Optionally, the method further comprises one or more steps of (1) filling the food composition into a container, (2) sealing the container, and (3) retorting the container.

The chunks can be made by any method known by the skilled artisan. Methods for manufacturing chunks useful in the present invention are described, for example, in U.S. Patent Nos. 5,132,137, 5,567,466, 4,781,939, 6,379,738, and 7,344,745.

In one embodiment, the chunks are made by grinding frozen meat and/or fish by-product materials and then mixing that ground meat/fish material with a cereal flour containing no significant amount of amylose and a powder mixture containing animal dehydrated protein, vitamin and mineral premixes, colorants, and preservatives. The resulting dough is then extruded onto a steam oven belt, cooked at 80 to 90°C, and cut into suitable size pieces of defined and various geometries (reformed chunks).

The jelly useful in the food compositions can be any jelly suitable for making chunks-in-jelly food compositions. Such jelly compositions are known in the art. The jelly preparation can be made, for example, by mixture of water and hydrocolloid powders, colorants, and salts. Jelly compositions typically contain gums such as kappa-carrageenan, carob, guar, and xanthan. Examples of jelly compositions useful in the present invention and their methods of manufacture can be found, for example, in U.S. Patent No. 7,344,745 and U.S. Application Publication No. 20080152774.

Methods for combining the chunk and jelly portions of the food compositions are also well known in the art. Any suitable method known to the skilled artisan for preparing the chunks-in-jelly food composition can be used, such as those described in U.S. Patent Nos. 4,781,939, 5,132,137, 5,567,466, 6,379,738, and 7,344,745. In a preferred embodiment the chunks, while hot, are added to a container of the jelly and mixed with the fluid jelly. The chunks-in-jelly mixture is then transferred to a container, sealed, and retorted to produce a chunks-in-jelly food composition.

Any suitable ratio of chunks to jelly known to the skilled artisan for preparing the chunks-in-jelly food composition can be used, such as those described in U.S. Patent Nos. 5,567,466 and 7,344,745. For example, a chunks:jelly ratio of 90:10, 85:15, 80:20, 75:25, 70:30, 65:35, 60:40, 55:45, 50:50, 45:55, 40:60, 35:65, 30:70, 25:75, 20:80, 15:85, or 10:90 may be used. Preferably, the chunks:jelly ratio is 65:35, 60:40, 55:45, 50:50, 45:55, 40:60, or 35:65.

In another aspect, the invention provides a chunks-in-jelly food composition made using a methods of the invention.

In another aspect, the invention provides a package comprising a chunks-in-jelly food composition of the present invention and a label affixed to the package containing a word or words, picture, design, acronym, slogan, phrase, or other device, or combination 9 thereof that indicates that the contents of the package contains a chunks-in-jelly food composition with beneficial properties, such as improved appearance, reduced jelly cloudiness and even chunk distribution. Typically, such device comprises the words "improved appearance", and "reduced cloudiness", or an equivalent expression printed on the package. Any package or packaging material suitable for containing the composition is useful in the invention, *e.g.,* bag, box, bottle, can, pouch, and the like manufactured from paper, plastic, foil, metal, and the like. In a preferred embodiment, the package contains a food composition of the present invention adapted for a particular animal such as a human, canine, or feline, as appropriate for the label, preferably a companion animal food composition for dogs or cats. In a preferred embodiment, the package is a retortable can, plastic container, or pouch comprising a chunks-in-jelly food composition of the present invention.

### EXAMPLES

The invention can be further illustrated by the following examples, although it will be understood that these examples are included merely for purposes of illustration and are not intended to limit the scope of the invention unless otherwise specifically indicated.

### Example 1

85 kg of frozen pork by-product was ground through a cruncher/breaker with grids of 12 mm. The ground by-product was mixed thoroughly with 1 kg of water and 15 kg of a powder mixture comprising: 9 kg of dehydrated animal protein; 2 kg plasma powder, and 3 kg of other ingredients such as vitamins and minerals. The resulting composition was mixed for 5 minutes to produce a homogeneous mixture. Then, this mixture was emulsified with a trigonal (grids/knives) emulsifier (grids 3 and 5 mm) to produce a dough. The dough was extruded through a square die onto a steam oven belt, cooked at about 85°C for 2 minutes, and cut into chunks to produce reformed chunks having an average size of about 0.5 inches on the longest side. The reformed chunks had various shapes and sizes.

A liquid jelly was made by mixing 99 kg of water, 0.4 kg of kappa-carrageenan, 0.3 kg of carob gum, and 500 grams of sodium chloride with a high shear mixer.

The reformed chunks and liquid jelly were filled into cans that were then sealed and retorted by heating to a temperature of 130°C for 20 minutes. The chunk:jelly ratio was 40:60, *i.e.,* each can was filled with 16 kg of chunks and 24 kg of jelly. On cooling, the liquid jelly set with the chunks dispersed throughout the jelly.

### Example 2

The procedure in Example 1 was repeated using 64.5 kg frozen pork by-product; 16.5 kg of wheat flour (amylopectin and amylose in a ratio of 75:25); and 15 kg of water; and 1 kg of plasma powder. A retorted can from Example 1 and a retorted can from Example 2 were opened and the product observed for cloudiness and transparency. The results showed that (1) the product made in Example 1 without wheat flour was significantly less cloudy and more transparent and had the appearance of a high quality product and (2) the product made in Example 2 with wheat flour was significantly cloudier and less transparent and had the appearance of a poor quality product.

### Example 3

The procedure in Example 2 was repeated except that 16.5 kg of ground (less than 1% of particles above 100µm) waxy corn (containing only trace amounts of amylose) was used instead of 16.5 kg of wheat flour (amylopectin and amylose in a ratio of 75:25 representing a total of about 67 to 71 % of starch in the wheat flour). A retorted can from Example 2 and a retorted can from Example 3 were opened and the product observed for cloudiness and transparency. The results showed that (1) the product made without wheat flour and with ground waxy corn was significantly less cloudy and more transparent and had the appearance of a high quality product and (2) the product made with wheat flour and without ground waxy corn was significantly more cloudy and less transparent and had the appearance of a poor quality product. This shows that products with little or no amylose have a less cloudy and more transparent jelly and a higher quality appearance.

### Example 4

The procedure in Example 2 was repeated except that 16.5 kg of modified waxy corn (containing only trace amounts of amylose), reticulated to obtain a better thermal stability, was used instead of 16.5 kg of wheat flour. A retorted can from Example 2 and a retorted can from Example 4 were opened and the product observed for cloudiness and transparency. The results showed that (1) the product made without wheat flour and with modified waxy corn was significantly less cloudy and more transparent and had the appearance of a high quality product and (2) the product made with wheat flour and without modified waxy corn was significantly more cloudy and less transparent and had the appearance of a poor quality product. This also shows that products with little or no amylose have a less cloudy and more transparent jelly and a higher quality appearance.

## Claims

1. A chunks-in-jelly food composition comprising a jelly and one or more chunks, the chunks comprising from 5% to 95% of one or more cereals and starches, wherein the cereals and starches contain less than about 5% amylose, and from 5% to 95% of one or more meats, animal products, or other ingredients.

2. The food composition of claim 1 wherein the chunks comprise at least about 15% of the one or more cereals and starches containing less than about 5% amylose.

3. The food composition of claim 1 wherein the cereals or starches contain less than about 4% amylose; optionally wherein the cereals or starches contain less than about 2% amylose; optionally wherein the cereals or starches contain less than about 1% amylose; optionally wherein the cereals or starches contain less than about 0.5% amylose.

4. The food composition of claim 1 wherein the cereals or starches are selected from waxy corn, waxy rice and waxy wheat.

5. The food composition of claim 1 formulated for consumption by companion animals; optionally (i) wherein the companion animals are dogs or cats; or (ii) wherein the chunks comprise from 15% to 20% of the one or more cereals and starches containing less than about 5% amylose, and between 80% and 85% of meat, animal products, or other ingredients; optionally further comprising one or more of animal dehydrated protein, plasma powder, vitamins, minerals, colorants, and preservatives.

6. The food composition of claim 1 formulated to provide complete and balanced nutrition for an animal.

7. A method for preparing a chunks-in-jelly food composition comprising:
a) preparing a chunks mixture comprising one or more cereals and starches, wherein the cereals and starches contain less than about 5% amylose;
b) using the chunks mixture to manufacture chunks;
c) preparing a jelly; and
d) mixing the chunks with the jelly to produce a chunks-in-jelly food composition.

8. The method of claim 7 further comprising filling the food composition into a container and sealing the container.

9. The method of claim 8 further comprising retorting the container.

10. The method of claim 7 wherein the chunks mixture of step a) comprises one or more meats, animal products, or other ingredients.

11. The method of claim 7 wherein the chunks mixture of step a) comprises from 5% to 95% of the one or more meats, animal products, or other ingredients, and from 5% to 95% of the one or more cereals and starches containing less than about 5% amylose.

12. The method of claim 7 wherein the food composition is formulated for consumption by companion animals; optionally wherein the companion animals are dogs or cats.

13. A chunks-in-jelly food composition obtainable by the method of any one of claims 7, 8 or 9.

14. A package comprising a chunks-in-jelly food composition comprising a jelly and one or more chunks, the chunks comprising from 5% to 95% of one or more cereals and starches, wherein the cereals and starches contain less than about 5% amylose, and from 5% to 95% of one or more meats, animal products, or other ingredients; the package further comprising a label affixed to the package, the label containing a word or words, picture, design, acronym, slogan, phrase, or other device, or combination thereof that indicates that the contents of the package contains a chunks-in-jelly food composition with beneficial properties.

## Patentansprüche

1. Chunks-in-Gelee-Nahrungsmittelzusammenstellung, aufweisend ein Gelee und ein oder mehrere Chunks, wobei due Chunks aufweisen von 5 % bis 95% einer oder mehrerer Cerealien oder Speisestärken, wobei die Cerealien und Speisestärken weniger als ungefähr 5% Amolyse und von 5% bis 95% einer oder mehrerer Fleischarten, tierischer Produkte oder anderer Zutaten beinhalten.

2. Nahrungszusammenstellung nach Anspruch 1, wobei die Chunks zumindest 15% einer oder mehrerer Cerealien und Speisestärken aufweisen, welche weniger als 5% Amylose beinhalten.

3. Nahrungszusammenstellung nach Anspruch 1, wobei die Cerealien oder Speisestärken weniger als 4% Amylose beinhalten; optional wobei die Cerealien oder Speisestärken weniger als 2% Amylose beinhalten; optional wobei die Cerealien oder Speisestärken weniger als 1% Amylose beinhalten; optional wobei die Cerealien oder Speisestärken weniger als 0,5% Amylose beinhalten.

4. Nahrungszusammenstellung nach Anspruch 1, wobei die Cerealien oder Speisestärken aus Wachsmais, Wachsreis und Wachsweizen gewählt werden.

5. Nahrungszusammenstellung nach Anspruch 1, formuliert für den Verzehr durch Haustiere; optional (i) wobei die Haustiere Hunde oder Katzen sind; optional (ii) wobei die Bröckchen von 15% bis 20% einer oder mehrerer Cerealien und Speisestärken aufweisen, welche weniger als 5% Amylose beinhalten, und zwischen 80% und 85% Fleisch, tierischer Produkte, oder anderen Zutaten; optional weitergehend aufweisend eines oder mehrerer dehydrierter tierischer Proteine, Plasmapulver, Vitamine, Minerale, Farbstoffe und Konservierungsmittel.

6. Nahrungszusammenstellung nach Anspruch 1 formuliert zur Bereitstellung einer vollwertigen und ausgewogenen Ernährung für ein Tier.

7. Verfahren zur Zubereitung einer Chunks-in-Gelee-Nahrungsmittelzusammenstellung, aufweisend:
a) Herstellung einer Chunks-Mischung aufweisend eine oder mehrere Cerealien und Speisestärken, wobei
b) Verwendung der Junks-Mischung zur Herstellung der Junks;
c) Zubereitung eines Gelees; und
d) Mischung der Junks mit dem Gelee zur Erstellung einer Bröckchen-in-Gelee-Nahrungsmittelzusammenstellung.

8. Verfahren nach Anspruch 7 weiterhin aufweisend das Abfüllen der Nahrungsmittelzusammenstellung in ein Behältnis und Verschleißen des Behältnis.

9. Verfahren nach Anspruch 8 weiterhin aufweisend das Druckerhitzen des Behältnis.

10. Verfahren nach Anspruch 7, wobei die Junks-Mischung nach Schritt a) eine oder mehrere Fleischarten, tierische Produkte oder andere Zutaten aufweist.

11. Verfahren nach Anspruch 7, wobei die Junks-Mischung nach Schritt a) von 5% bis 95% einer oder mehrerer Fleischarten, tierische Produkte oder andere Zutaten aufweist, und von 5% bis 95% einer oder mehrerer Cerealien und Speisestärken, welche weniger als 5% Amylose beinhalten.

12. Verfahren nach Anspruch 7, wobei die Nahrungsmittelzusammenstellung für den Verzehr durch Haustiere formuliert ist; optional wobei die Haustiere Hunde oder Katzen sind.

13. Junks-in-Gelee-Nahrungsmittelzusammenstellung, erhältlich durch das Verfahren nach einem der Ansprüche 7, 8 oder 9.

14. Packung aufweisend eine Junks-in-Gelee-Nahrungsmittelzusammenstellung, aufweisend ein Gelee und ein oder mehrere Junks, wobei die Junks aufweisen zwischen 5% bis 95% einer oder mehrerer Cerealien und Speisestärken, wobei die Cerealien und Speisestärken weniger als ungefähr 5% Amylose, und zwischen 5% bis 95% einer oder mehrerer Fleischarten, tierischer Produkte und anderer Zutaten; wobei die Packung weitergehend aufweist ein an der Packung befestigtes Label, wobei das Label ein Wort oder Wörter, Bild, Design, Abkürzung, Slogan, Formulierung oder andere Embleme oder Kombinationen davon aufweist, welche beschreibt, dass der Inhalt der Packung eine Junks-in-Gelee-Nahrungsmittelzusammenstellung mit vorteilhaften Eigenschaften enthält.

## Revendications

1. Composition alimentaire à morceaux en gelée comprenant une gelée et un ou plusieurs morceaux, les morceaux comprenant de 5% à 95% d'un ou plusieurs éléments parmi céréales et amidons, dans laquelle les céréales et amidons contiennent moins que environ 5% d'amylose, et de 5% à 95% d'un ou plusieurs éléments parmi viandes, produits d'origine animale, ou autres ingrédients.

2. Composition alimentaire selon la revendication 1, dans laquelle les morceaux comprennent au moins environ 15% dudit/desdits un ou plusieurs éléments parmi céréales et amidons contenant moins que environ 5% d'amylose.

3. Composition alimentaire selon la revendication 1, dans laquelle les céréales ou amidons contiennent moins que environ 4% d'amylose; facultativement dans laquelle les céréales ou amidons contiennent moins que environ 2% d'amylose; facultativement dans laquelle les céréales ou amidons contiennent moins que environ 1% d'amylose; facultativement dans laquelle les céréales ou amidons contiennent moins que environ 0,5% d'amylose.

4. Composition alimentaire selon la revendication 1, dans laquelle les céréales ou amidons sont choisis parmi le maïs cireux, le riz cireux et le blé cireux.

5. Composition alimentaire selon la revendication 1, formulée pour une consommation par des animaux de compagnie; facultativement (i) dans laquelle les animaux de compagnie sont des chiens ou des chats, ou (ii) dans laquelle les morceaux comprennent de 15% à 20% dudit/desdits un ou plusieurs éléments parmi céréales et amidons contenant mois que environ 5% d'amylose, et entre 80% et 85% de viande, produits d'origine animale, ou autres ingrédients, comprenant facultativement en outre un ou plusieurs éléments parmi protéine déshydratée animale, poudre de plasma, vitamines, minéraux, colorants, et des agents de conservation.

6. Composition alimentaire selon la revendication 1, formulée pour fournir une alimentation complète et équilibrée pour un animal.

7. Procédé destiné à préparer une composition alimentaire à morceaux en gelée, comprenant:
a) la préparation d'un mélange de morceaux comprenant un ou plusieurs éléments parmi céréales et amidons, dans lequel les céréales et amidons contiennent moins que environ 5% d'amylose;
b) l'utilisation du mélange de morceaux pour fabriquer des morceaux;
c) la préparation d'une gelée; et
d) le mélange des morceaux avec la gelée pour produire une composition alimentaire à morceaux en gelée.

8. Procédé selon la revendication 7, comprenant en outre le remplissage de la composition alimentaire dans un récipient et le scellement du récipient.

9. Procédé selon la revendication 8, comprenant en outre l'autoclavage du récipient.

10. Procédé selon la revendication 7, dans lequel le mélange de morceaux de l'étape a) comprend un ou plusieurs éléments parmi viandes, produits d'origine animale, ou autres ingrédients.

11. Procédé selon la revendication 7, dans lequel le mélange de morceaux de l'étape a) comprend de 5% à 95% dudit/desdits un ou plusieurs éléments parmi viandes, produits d'origine animale, ou autres ingrédients, et de 5% à 95% dudit/desdits un ou plusieurs éléments parmi céréales et amidons contenant moins que environ 5% d'amylose.

12. Procédé selon la revendication 7, dans lequel la composition alimentaire est formulée pour une consommation par des animaux de compagnie; facultativement dans lequel les animaux de compagnie sont des chiens ou des chats.

13. Composition alimentaire à morceaux en gelée susceptible d'être obtenue par le procédé selon l'une quelconque des revendications 7, 8 ou 9.

14. Emballage comprenant une composition alimentaire à morceaux en gelée comprenant une gelée et un ou plusieurs morceaux, les morceaux comprenant de 5% à 95% d'un ou plusieurs éléments parmi céréales et amidons, dans lequel les céréales et amidons contiennent moins que environ 5% d'amylose, et de 5% à 95% d'un ou plusieurs éléments parmi viandes, produits d'origine animale, ou autres ingrédients; l'emballage comprenant en outre une étiquette apposée sur l'emballage, l'étiquette contenant un mot ou des mots, une image, un design, un acronyme, un slogan, une phrase, ou un autre dispositif, ou une combinaison de ceux-ci qui indique que le contenu de l'emballage contient une composition alimentaire à morceaux en gelée avec des propriétés bénéfiques.
